Europäisches Patentamt

European Patent Office

Office européen des brevets

(19)

(11) Publication number: **0 228 619**

**A1**

(12) # EUROPEAN PATENT APPLICATION

(21) Application number: **86117147.8**

(22) Date of filing: **09.12.86**

(51) Int. Cl.⁴: **C 21 C 5/32**

(30) Priority: **10.12.85 JP 278591/85**

(43) Date of publication of application:
**15.07.87 Bulletin 87/29**

(84) Designated Contracting States:
**AT BE CH DE ES FR GB GR IT LI LU NL SE**

(71) Applicant: **SUMITOMO CHEMICAL COMPANY, LIMITED**
**15 Kitahama 5-chome Higashi-ku**
**Osaka-shi Osaka 541(JP)**

(71) Applicant: **SEITETSU KAGAKU CO., LTD.**
**346-1, Miyanishi Harimacho, Kako-gun**
**Hyogo-ken 673-01(JP)**

(84) Designated Contracting States:

(72) Inventor: **Hayashi, Shigeo NIPPON STEEL**
**CORPORATION**
**6-3, Ohtemachi-2-chome**
**Chiyoda-ku Tokyo(JP)**

(72) Inventor: **Yamano, Matsuki Hirohata Factory**
**NIPPON STEEL CORPORATION 1, Fujicho**
**Hirohata-ku Himeji-shi(JP)**

(72) Inventor: **Eba, Atsushi Hirohata Factory**
**NIPPON STEEL CORPORATION 1, Fujicho**
**Hirohata-ku Himeji-shi(JP)**

(72) Inventor: **Kurimoto, Makoto**
**6-427, Ikkucho-2-chome**
**Niihama-shi(JP)**

(72) Inventor: **Uno, Masaru**
**849-1, Nishifutami**
**Futamicho Akashi-shi(JP)**

(74) Representative: **Henkel, Feiler, Hänzel & Partner**
**Möhlstrasse 37**
**D-8000 München 80(DE)**

(54) **Converter top-bottom blow smelting process.**

(57) Disclosed is a converter top-bottom blow smelting process which comprises blowing oxygen into a converter from the top of the converter and blowing carbon dioxide into the converter from the bottom of the converter to thereby perform smelting, characterized in that carbon dioxide of a purity of 98.0-99.9% separated and refined from carbon dioxide-containing gas produced in iron mills using a pressure swing adsorption apparatus is used as a gas blown from the bottom of the converter.

FIG. I

0228619

# CONVERTER TOP-BOTTOM BLOW SMELTING PROCESS

BACKGROUND OF THE INVENTION

The present invention relates to an improved converter top-bottom blow smelting process and more particularly to a process wherein carbon dioxide is separated and refined from carbon dioxide-containing gas produced in iron mills, and the separated and refined gas is effectively used for the operation of a top-bottom blow smelting converter, thereby seeking the cost-down in top-bottom blow smelting.

In recent converter steel-making processes, the so-called top-bottom blow smelting process has become a mainstream, wherein oxygen is blown from the top of a converter and carbon dioxide from the bottom of the converter, thereby performing stir smelting.

Hithertofore, bottom blowing gas for the top-bottom blow smelting (combined blow smelting) is thought to be of a very high purity for the security of the quality of molten steel. Accordingly, liquefied carbon dioxide (purity: over 99.95%) purchased is gasified and used as the bottom blowing gas.

Among methods for separating and recovering carbon dioxide from carbon dioxide-containing mixed gas, e.g., combustion gas exhausted, most commonly employed is the alkanol amine method or hot potassium carbonate method. The method comprises introducing a mixed gas into an absorption tower with application of pressure, making carbon dioxide in the mixed gas to be absorbed into an alkanol amine solution or potassium carbonate solution, introducing into a stripper the solution by which carbon dioxide has been absorbed, heating the solution in the stripper by steam, and thereby separating carbon dioxide.

According to the above method, steam in large amounts is required, and a scale merit is not expected for a equipment scale corresponding to the amount of carbon dioxide used in a single iron mill. Therefore, it is not economical to produce carbon dioxide using those conventional method. Furthermore, the purity of the gas recovered is about 90-95%. It follows that the gas recovered can not be used as the aforesaid bottom blowing gas.

On the other hand, it is known that according to the process for separating and refining carbon dioxide by the pressure swing adsorption and separation method (PSA method) disclosed in Japanese Patent Application Laid-Open Publication No. 173116/84, carbon dioxide of a purity of 99.5-99.9% can be recovered from carbon dioxide-containing gas.

Accordingly, carbon dioxide can be separated and recovered from carbon dioxide-containing gas produced in iron mills using the aforesaid PSA method.

However, as previously mentioned, it has been thought that carbon dioxide of a very high purity of over 99.95% is required as the bottom blowing gas. Carbon dioxide on such a purity level can not be obtained even by the PSA method.

Accordingly, no attempt has been made to separate and recover carbon dioxide from carbon dioxide-containing gas produced in iron mills using the PSA method.

SUMMARY OF THE INVENTION

The inventors have made studies of the carbon dioxide concentration of the bottom blowing gas for the top-bottom blow smelting. As a result, they have obtained a new knowledge that if the $CO_2$ concentration is over 98.0% and $N_2$ concentration is below 2.0% at the closing stage of the top-bottom blow smelting, namely, at the time when $N_2$ gas, a foreign matter in $CO_2$ gas, is rather soluble in molten steel, the quality of the molten steel is not deteriorated.

The present invention has been made based on the aforesaid new knowledge and paying attention to the fact that $CO_2$ of 99.5-99.9% purity can be separated and refined from carbon dioxide ($CO_2$)-containing gas at a low running cost using PSA method disclosed in the Japanese Patent Application Laid-Open Publication No. 173116/84. The outline of the invention is as follows.

The present invention relates to a converter top-bottom blow smelting process which comprises blowing oxygen into a converter from the top of the converter and blowing carbon dioxide into the converter from the bottom of the converter to thereby perform smelting, characterized in that carbon dioxide of a purity of 98.0-99.9% separated and refined from carbon dioxide-containing gas produced in iron mills using a pressure swing adsorption apparatus is used as a gas blown from the bottom of the converter.

BRIEF DESCRIPTION OF THE DRAWINGS

Fig. 1 is a diagram illustrating relationships between the $CO_2$ gas purity of the bottom blowing gas and the blow-off [C] and blow-off [T-N] of molten steel in a combined blow smelting (top-bottom blow smelting) converter;

Fig. 2 is a process flow diagram showing an embodiment of the present invention;

Fig. 3 is a diagram illustrating the effects of the removal of moisture in a starting gas on the purity and recovery of $CO_2$ gas separated, refined and recovered; and

Fig. 4 shows a blow smelting pattern in the embodiment.

DESCRIPTION OF THE PREFERRED EMBODIMENTS

Hereinafter, the present invention will be described in detail.

In the present invention, carbon dioxide is separated and refined from carbon dioxide-containing gas produced in iron mills, such as blast furnace gas, converter gas and combustion gases exhausted from boilers, hot blast stoves, coke ovens, heating ovens, etc., and the separated and refined gas is effectively used as the bottom blowing gas for the top-bottom blow smelting (combined blow smelting) converter, thereby seeking the cost-down in smelting.

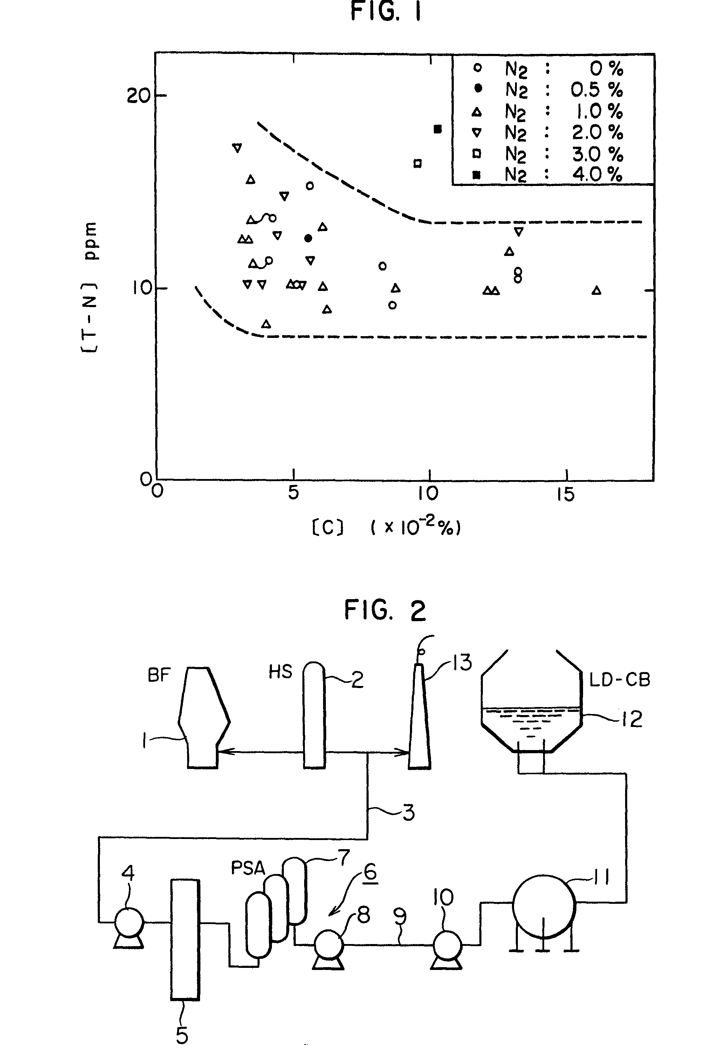

Fig. 1 shows the results of the investigation of a relationship between the $CO_2$ purity of the bottom blowing gas and the concentration of nitrogen in steel with the change of the concentration of $N_2$ in $CO_2$ in order to confirm the gas purity required for the bottom blowing gas for the top-bottom blow smelting (combined blow smelting) converter. In the drawing, the abscissa indicates the concentration (%) of carbon in steel at the time of blow-off (hereafter represented by blow-off [C]), and the ordinate indicates the concentration (ppm) of the total nitrogen in the steel at the time of blow-off (hereinafter represented by blow-off [T-N]). The region indicated by the broken lines shows a relationship between the blow-off [C] and the blow-off [T-N] when $CO_2$ of a very high purity of over 99.95% is used.

The following will be apparent from the drawing.

Namely, with the bottom blowing gas of over 98.0% purity, the same quality of molten steel as with gas of a very high purity of over 99.95% can be obtained.

Fig. 2 shows an embodiment of the invention and particularly the flow of a process wherein $CO_2$ gas of a purity of over 98.0%, e.g., 99.0% is separated and recovered from combustion gas exhausted from a hot blast stove, which has been emanated into the atmosphere so far, and the recovered $CO_2$ gas is used for the operation of the top-bottom blow smelting (combined blow smelting) converter. In the drawing, numeral 1 designates a blast furnace, numeral 2 a hot blast stove for sending hot air to the blast furnace 1, numeral 3 combustion gas exhausted from the hot blast stove, and numeral 4 a suction blower for the exhaust gas 3. Numeral 5 designates a cooling and moisture-removing device for cooling the exhaust gas 3 and removing moisture therein, numeral 6 a pressure swing adsorption apparatus (PSA apparatus), numeral 7 an adsorption tower packed with an adsorbent for $CO_2$, and numeral 8 a vacuum pump for desorbing $CO_2$ adsorbed by the adsorbent.

Numeral 10 designates a pressure raising device for raising the pressure of $CO_2$ gas 9 of 99.0% purity separated, refined and recovered by the PSA apparatus 6 and sending the resultant $CO_2$ gas to a high pressure holder 11.

Numeral 12 designates a combined blow smelting (top-bottom blow smelting) converter for performing combined blow smelting (top-bottom blow smelting) with pure oxygen blown into from the top and $CO_2$ gas of 99.0% purity from the bottom. Numeral 13 designates a chimney for emanating the remainder of the exhaust gas 3 into the atmosphere.

$CO_2$ gas is separated, refined and recovered using the PSA apparatus 6 after cooling the exhaust gas 3 and removing moisture in it for the following reason.

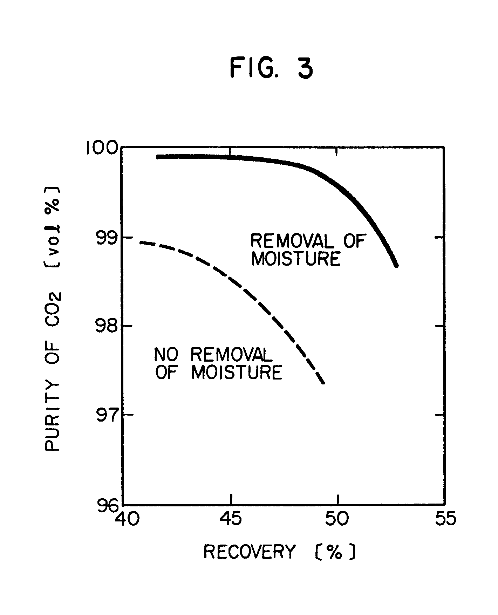

Fig. 3 shows $CO_2$ purities and recoveries when the hot blast stove exhaust gas ($CO_2$ concentration: 29%) having a dew point of 27°C is supplied to the PSA apparatus 6 at ordinary temperature (about 25°C) without the removal of moisture and the aforesaid exhaust gas is supplied to the PSA apparatus 6 after the removal of the moisture to a dew point of 10°C using the cooling and moisture-removing device 5. It is obvious from the drawing that the recovery of $CO_2$ can be greatly elevated in the purity range of 99.0% to 99.9% by the moisture removing treatment, whereby the cost of the $CO_2$ gas can be reduced greatly.

Recovery is defined as follows:

Recovery = [(Amount of gas produced as a product × Purity of $CO_2$) / (Amount of starting gas used × Concentration of $CO_2$)] × 100 (%)

- 8 -

Using the above-described process, $CO_2$ gas of 99.0% purity is produced at a cost less than 1/3 of the purchase price of carbon dioxide on the market.

Example

Combustion gas ($CO_2$: 29%, $N_2$: 69%, $O_2$: 2%) having a dew point of 27°C exhausted from a hot blast stove was cooled to a dew point of 10°C to remove moisture in it. The gas was then separated and refined at ambient temperature using a PSA apparatus having three adsorption towers each packed with molecular sieving active carbon (manufactured by Bergwerksverband GmbH in West Germany) to obtain $CO_2$ gas of 99.0% purity (recovery: 50%), which was collected in a high pressure holder.

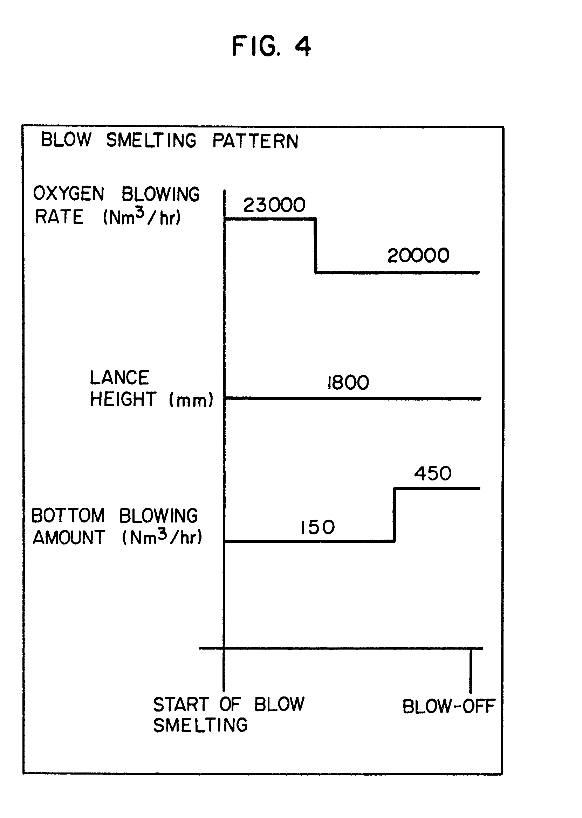

Hereafter, using the $CO_2$ gas of 99.0% purity as the bottom blowing gas for a combined blow smelting (top-bottom blow smelting) converter, combined blow smelting (top-bottom blow smelting) was performed under combined blow smelting conditions shown in Table 1 and Fig. 4. Fig. 4 shows oxygen blowing rates, lance height and bottom blowing amounts with the lapse of time.

Table 1

| | Molten iron components (%) | | | | | Molten iron temperature (°C) | Molten iron compounding rate (%) |
|---|---|---|---|---|---|---|---|
| | C | Si | Mn | P | S | | |
| Preparation conditions | 4.5 | 0.50 | 0.45 | 0.100 | 0.020 | 1340 | 88~93 |
| Blow-off target | 0.05 | Tr | 0.15 | 0.015 | 0.015 | 1670~1700 | |

The results are shown together with those of a former example in Table 2. In the former example is shown the results of combined blow smelting performed under the same conditions as in Table 1 using $CO_2$ gas of a very high purity of 99.95% as the bottom blowing gas.

Table 2

| | Blow-off [C] (%) | | Blow-off [T-N] (ppm) | |
|---|---|---|---|---|
| | Average $\bar{X}$ | Standard deviation $\sigma$ | Average $\bar{X}$ | Standard deviation $\sigma$ |
| Example | 0.05 | 0.008 | 11.9 | 2.23 |
| Former example | 0.05 | 0.008 | 11.3 | 1.60 |

It was confirmed from Table 2 that when the combined blow smelting (top-bottom blow smelting) is performed using $CO_2$ gas of 99.0% purity as the bottom blowing gas for the combined blow smelting (top-bottom blow smelting) converter, the blow-off [C] and blow-off [T-N] of molten steel are not much different from those with $CO_2$ gas of a very high purity of 99.95%, and the quality of the molten steel is not deteriorated.

As has been described in detail, according to the invention, $CO_2$ gas of over 98.0% purity which does not deteriorate the quality of molten steel is separated and recovered from carbon dioxide-containing gas produced in iron mills as a starting gas, at a low running cost using the PSA apparatus, and the separated and recovered $CO_2$ gas is used as the bottom blowing gas for the combined blow smelting converter, whereby steel-making costs can be reduced greatly.

- 11 - 0228619

WHAT IS CLAIMED IS

1. A converter top-bottom blow smelting process which comprises blowing oxygen into a converter from the top of the converter and blowing carbon dioxide into the converter from the bottom of the converter to thereby perform smelting, characterized in that carbon dioxide of a purity of 98.0-99.9% separated and refined from carbon dioxide-containing gas produced in iron mills using a pressure swing adsorption apparatus is used as a gas blown from the bottom of the converter.

1/3
FIG. 1

FIG. 2

FIG. 3

FIG. 4

BLOW SMELTING PATTERN

OXYGEN BLOWING RATE (Nm³/hr) 23000 20000

LANCE HEIGHT (mm) 1800

BOTTOM BLOWING AMOUNT (Nm³/hr) 150 450

START OF BLOW SMELTING    BLOW-OFF

European Patent Office

**EUROPEAN SEARCH REPORT**

0228619

Application number

EP 86 11 7147

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 457 325 (SUMITOMO) <br> * Figures 1,3; claims 1,14; page 17, table 2 * | 1 | C 21 C 5/32 |
| Y | EP-A-0 103 070 (BERGWERKSVERBAND) <br> * Abstract; claims * & JP-A-59 173 116 (Cat. Y,D) | 1 | |
| A | EP-A-0 005 506 (BASF) | | |

|  |
|---|
| **TECHNICAL FIELDS SEARCHED (Int. Cl.4)** |
| C 21 C <br> B 01 D |

The present search report has been drawn up for all claims

| Place of search | Date of completion of the search | Examiner |
|---|---|---|
| THE HAGUE | 19-03-1987 | OBERWALLENEY R.P.L.I |